# EUROPEAN PATENT APPLICATION

(11) **EP 4 650 716 A1**
(43) Date of publication of application: **19.11.2025**
(21) Application number: 25167594.8
(22) Date of filing: 31.03.2025
(51) Int. Cl.: G01C 23/00, G08G 5/00

(54) **SYSTEM AND METHOD FOR PROVIDING TAIL SPECIFIC FUEL EFFICIENCY ADVISORIES USING ACARS**

(30) Priority: 13.05.2024 US 202418662463
(71) Applicant: The Boeing Company, Arlington, VA 22202 (US)
(72) Inventor: JAGADEESH, Chaitra, Arlington, 22202 (US); MASARU NARASIMHULU, Veeresh Kumar, Arlington, 22202 (US); DWIVEDI, Abhishek, Arlington, 22202 (US); KOENNEN, Joost E., Arlington, 22202 (US); ARIPIRALA, Chaitanya Pavan K., Arlington, 22202 (US); CHAUHAN, Prashant Singh, Arlington, 22202 (US)
(74) Representative: Howson, Richard Giles Bentham

(57) **Abstract**

The present disclosure provides techniques for leveraging Aircraft Communications, Addressing and Reporting System (ACARS) messages to provide advisories to a flight crew in order to encourage fuel savings and reduction of carbon emissions. In one aspect, a downlink ACARS message is transmitted by an aircraft in flight to a ground station. Parameter values from the downlink ACARS message are extracted. A target parameter value for the aircraft is determined based on the extracted parameter values and a tail specific offset. The tail specific offset indicates a deviation of an actual aircraft performance of the aircraft from a baseline aircraft performance for the aircraft. An uplink ACARS message containing the determined target parameter value is transmitted to the aircraft in flight. An advisory suggesting the target parameter value is presented to a flight crew of the aircraft.

## Description

### FIELD

Aspects of the present disclosure relate to techniques for using Aircraft Communications, Addressing and Reporting System (ACARS) messages to provide advisories to a flight crew in order to encourage fuel savings.

### BACKGROUND

Fuel efficiency and sustainability are areas of focus for airlines, governments, and aircraft Original Equipment Manufacturers (OEMs). Some aircraft include systems that support airlines in saving fuel and reducing carbon emissions by providing advisories. However, such conventional systems have certain drawbacks, which limits their adoption and usage. For instance, conventional systems may utilize an Electronic Flight Bag (EFB), or a portable electronic display, that requires a member of a flight crew to manually enter current flight information to ultimately have advisories provided to them. This increases the flight crew workload and requires a portable device. Accordingly, there is a need for an improved technique for providing advisories to flight crew members to encourage fuel savings and reduction of carbon emissions.

### SUMMARY

In one aspect, a method is provided. The method includes receiving a downlink aircraft communications, addressing and reporting system (ACARS) message from an aircraft in flight; determining a target parameter value for the aircraft based at least in part on parameter values extracted from the downlink ACARS message and a tail specific offset, the tail specific offset indicating a deviation of an actual aircraft performance of the aircraft from a baseline aircraft performance for the aircraft; and providing an uplink ACARS message containing the target parameter value to the aircraft in flight.

In a further aspect, in combination with any example method above or below, the method includes presenting an advisory suggesting the target parameter value to a flight crew of the aircraft.

In a further aspect, in combination with any example method above or below, the downlink ACARS message is generated and downlinked from the aircraft to a ground station automatically.

In a further aspect, in combination with any example method above or below, the parameter values include a parameter value for a gross weight of the aircraft, a parameter value for a static air temperature, and parameter value for an altitude of the aircraft in flight.

In a further aspect, in combination with any example method above or below, the target parameter value is a target speed for the aircraft.

In a further aspect, in combination with any example method above or below, the target parameter value is a target altitude for the aircraft.

In a further aspect, in combination with any example method above or below, the target parameter value is one of a plurality of target parameter values for the aircraft, and wherein the plurality of target parameter values include a target speed and a target altitude for the aircraft.

In a further aspect, in combination with any example method above or below, the receiving, the determining, and the providing are performed at a ground station.

In a further aspect, in combination with any example method above or below, the method includes receiving past flight data associated with the aircraft, and using a machine-learned model to output the tail specific offset based at least in part on the past flight data.

In a further aspect, in combination with any example method above or below, the method includes automatically controlling, by a computing device of the aircraft, the aircraft according to the target parameter value provided in the uplink ACARS message to the aircraft.

In another aspect, a ground station is provided. The ground station includes one or more processors and one or more memory devices that store a program executable by the one or more processors to perform an operation, the operation includes: receiving a downlink aircraft communications, addressing and reporting system (ACARS) message from an aircraft in flight; determining a target parameter value for the aircraft based at least in part on parameter values extracted from the downlink ACARS message and a tail specific offset, the tail specific offset indicating a deviation of an actual aircraft performance of the aircraft from a baseline aircraft performance for the aircraft; and providing an uplink ACARS message containing the target parameter value to the aircraft in flight.

In a further aspect, in combination with any example ground station above or below, the parameter values include a parameter value for a gross weight of the aircraft, a parameter value for a static air temperature, and parameter value for an altitude of the aircraft in flight.

In a further aspect, in combination with any example ground station above or below, the target parameter value is one of a plurality of target parameter values for the aircraft, and wherein the plurality of target parameter values include a target speed and a target altitude for the aircraft.

In a further aspect, in combination with any example ground station above or below, the operation further includes receiving past flight data associated with the aircraft; and using a machine-learned model to output the tail specific offset based at least in part on the past flight data.

In a further aspect, in combination with any example ground station above or below, the operation further includes generating the uplink ACARS message, the uplink ACARS message has an advisory that contains the target parameter value.

In yet another aspect, a computing system for an aircraft is provided. The computing system includes one or more processors and one or more memory devices that store a program executable by the one or more processors to perform an operation. The operation includes instructing, during a flight of the aircraft, a transmission of a downlink aircraft communications, addressing and reporting system (ACARS) message to a ground station; receiving, during the flight, an uplink ACARS message transmitted by the ground station, the uplink ACARS message contains a target parameter value based at least in part on parameter values extracted from the downlink ACARS message and a tail specific offset, the tail specific offset indicating a deviation of an actual aircraft performance of the aircraft from a baseline aircraft performance for the aircraft; and generating, during the flight, an advisory that presents the target parameter value to a flight crew of the aircraft.

In a further aspect, in combination with any example computing system above or below, at least one processor of the one or more processors and at least one memory device of the one or more memory devices are embodied in a flight management computer, and wherein the at least one processor of the flight management computer receives the uplink ACARS message and causes the advisory to be presented to the flight crew.

In a further aspect, in combination with any example aircraft above or below, the target parameter value is one of a plurality of target parameter values for the aircraft, and wherein the plurality of target parameter values include a target speed and a target altitude for the aircraft.

In a further aspect, in combination with any example aircraft above or below, the parameter values include a parameter value for a gross weight of the aircraft, a parameter value for a static air temperature, and parameter value for an altitude of the aircraft in flight.

In a further aspect, in combination with any example aircraft above or below, the operation further includes generating the downlink ACARS message, and wherein the generating and the causing, during the flight of the aircraft, transmission of the downlink ACARS message to the ground station occur automatically without flight crew intervention.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
FIG. 1 is a schematic diagram depicting an aircraft in communication with a remote station according to an example aspect of the present disclosure.
FIG. 2 is a flow diagram for a technique for providing an advisory to a flight crew, such as an advisory that suggests a speed and/or altitude that can reduce the fuel utilized by fuel-consuming engines of an aircraft.
FIG. 3 is a flow diagram depicting the operations performed by a ground station.
FIG. 4 is a flow diagram of an example method.
FIG. 5 is a flow diagram of an example method.
FIG. 6 is a block diagram of a computing system for implementing one or more aspects of the present disclosure.

### DETAILED DESCRIPTION

The present disclosure provides techniques for leveraging Aircraft Communications, Addressing and Reporting System (ACARS) messages to provide advisories to a flight crew in order to encourage fuel savings and reduction of carbon emissions. Conventionally, providing such advisories has resulted in increased flight crew workload and has typically required a portable device. The techniques disclosed herein address such challenges.

In one example aspect, ACARS messages (e.g., position messages) are downlinked by an aircraft to a ground station. Such ACARS messages can be downlinked automatically without pilot intervention and can be sent using Aeronautical Radio, Incorporated (ARINC) protocols, such as ARINC protocols 618, 619, 620, 745, etc. The ground station includes a ground computing system operable to decode downlinked ACARS messages into an understandable format. The ground computing system can extract parameter values for relevant parameters from the decoded ACARS messages. Example relevant parameters include, without limitation, gross weight, static air temperature, and altitude. The ground computing system includes an advisor module, which when executed, outputs one or more recommended target parameter values, such as a suggested speed and altitude for the aircraft. The parameter values extracted from a downlinked ACARS message can be input into the advisor module along with a tail specific offset. The tail specific offset can be generated by one or more models based on past flight history associated with the aircraft. The tail specific offset indicates a deviation of an actual aircraft performance of the aircraft from a baseline aircraft performance for the aircraft. Accordingly, based on the parameter values extracted from a downlinked ACARS message and the tail specific offset, one or more recommended target parameter values for the aircraft are generated and output from the advisor module. Further, an ACARS message is created having an advisory that contains the one or more recommended target parameter values. The created ACARS message is uplinked to the aircraft and the advisory is presented to the flight crew. The flight crew can then enter the one or more recommended target parameter values and the aircraft can be controlled to fly according to the suggested recommended target parameter values. For instance, a Flight Management Computer (FMC) of the aircraft can receive the recommended target parameter values and cause the aircraft to fly accordingly, e.g., at the recommended speed and altitude.

The techniques provided herein can provide certain advantages, benefits, and/or technical effects. For instance, the techniques provided herein can remove flight crew workload-a pilot no longer need enter details on a portable device, as target parameter value recommendations can be input straight to the FMC (or FMCs) of the aircraft. Moreover, the techniques provided herein can remove the need for portable devices and/or an additional application on such devices in order for a flight crew to receive an advisory. In this regard, the techniques provided herein can provide a hassle free solution without need for airlines or aircraft operators (including military aircraft operators) to learn and implement an additional application. That is, advisories can be provided without dependency on a portable device or a specific operating system type. Accordingly, the techniques provided herein can help airlines or aircraft operators to achieve their sustainability and efficiency goals, such as by providing fuel savings.

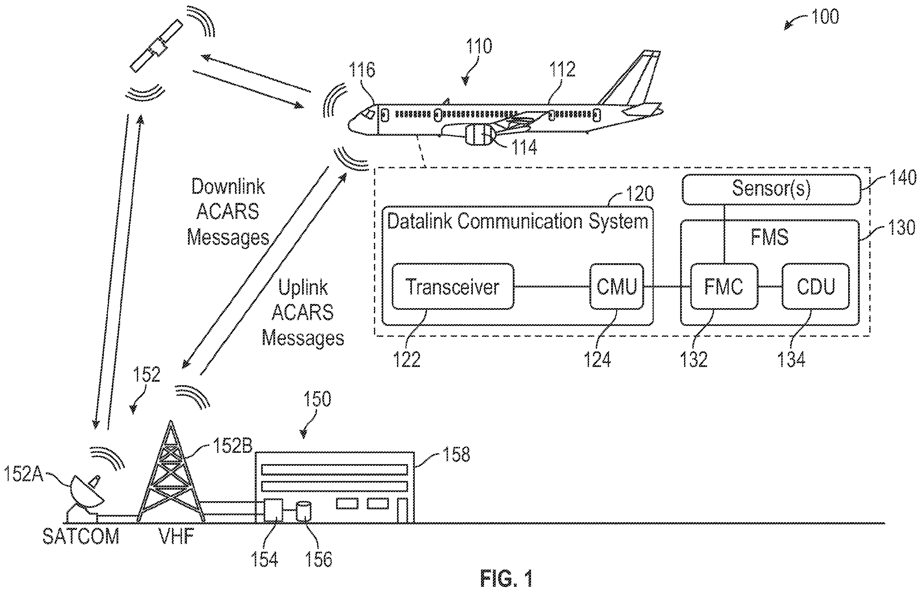

FIG. 1 provides a schematic diagram depicting a communication system 100 that enables communication between an aircraft 110 and a ground station 150. As shown in FIG. 1, the aircraft 110 includes a fuselage 112, one or more engines 114, and a cockpit 116. The cockpit 116 can accommodate a flight crew and can include various controls, instruments, flight displays, and computing devices for controlling the aircraft 110. The engines 114 (only one shown in FIG. 1) provide propulsion for the aircraft 110 and can be fuel-consuming engines. For instance, the engines 114 can be gas turbine engines, such as turbofans or turboprops. In FIG. 1, the engines 114 are shown as turbofans.

The aircraft 110 includes a datalink communication system 120 (e.g., an ACARS) that enables transmission of messages (e.g., ACARS messages) between the aircraft 110 and ground stations, such as the ground station 150 of FIG. 1. ACARS messages sent from the aircraft 110 to the ground station 150 can be denoted as downlink ACARS messages while ACARS messages sent from the ground station 150 to the aircraft 110 can be denoted as uplink ACARS messages. ACARS messages can be sent via airband radio (e.g., Very High Frequency (VHF), High Frequency (HF), etc.) or satellite (e.g., SATCOM). ACARS messages are generally Short Burst Data (SBD) messages that can provide, among other things, information relating to the performance and/or flight conditions of the aircraft 110 in flight.

The datalink communication system 120, or ACARS, includes a transceiver 122 and a Communication Management Unit (CMU), or CMU 124, or in some instances, a Management Unit (MU). The transceiver 122 can be communicatively coupled with the CMU 124, e.g., via a wired or wireless communication link. Generally, the CMU 124 controls operations of the datalink communication system 120 (e.g., routing of ACARS messages) and can include one or more processors and one or more memory devices (e.g., one or more non-transitory memory devices). The transceiver 122 transmits and receives signals to and from a remote unit, such as a transceiver of the ground station 150.

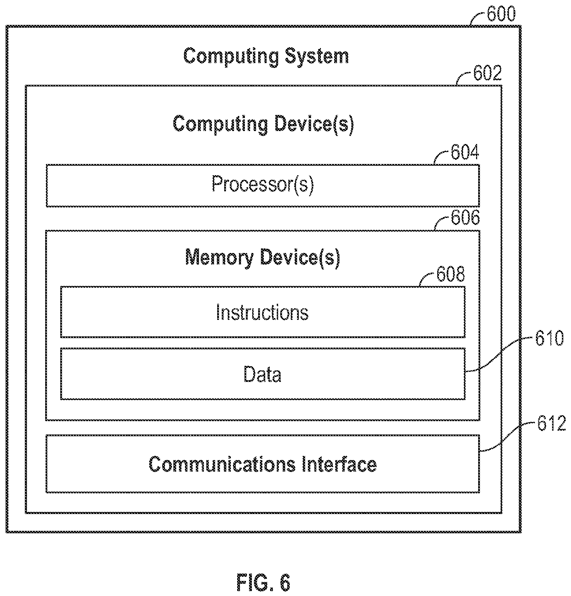

The CMU 124 can be communicatively coupled with components of a Flight Management System (FMS), or FMS 130. For instance, the CMU 124 can be communicatively couple with a Flight Management Computer (FMC), or FMC 132, which can allow the CMU 124 to interface with a human-machine interface device, such as a Control Display Unit (CDU), or CDU 134. The CDU 134 can include a display screen and user input controls (e.g., a keyboard). For instance, uplinked ACARS messages can be displayed on the display screen of the CDU 134. The FMC 132 functions generally to control the FMS 130. For instance, the FMC 132 can provide navigation and flight planning guidance, trajectory prediction, performance computations, and other functions. The FMC 132 can be constantly updated with aircraft position, speed, altitude, weight, etc. as well as with ambient conditions, such as temperatures. Parameter values for such parameters can be measured by one or more sensors 140 or derived from the measured values. The computing devices of the aircraft 110 can be configured in a same or similar manner as one of the computing devices of the computing system provided in FIG. 6 and the accompanying text.

The ground station 150 can include one or more ground transceivers 152 and a ground computing system 154. The ground computing system 154 can include one or more processors and one or more memory devices (e.g., one or more non-transitory memory devices), which can be embodied in one more ground computing devices. For instance, the ground transceivers 152 can include a satellite dish 152A (e.g., for SATCOM) and/or a cellular tower 152B (e.g., for VHF communications). The ground computing devices can be communicatively coupled with the ground transceivers 152. The ground transceivers 152 are operable to receive communications (e.g., downlinked ACARS messages) transmitted by the aircraft 110. The received communications can be routed to the ground computing devices. The ground computing devices are operable to receive the communications, extract the data therefrom, and to perform various operations using the data, such as determining speeds and/or altitudes for the aircraft 110 to achieve fuel savings as will be provided in detail herein. The ground computing devices can be communicatively coupled with one or more data stores 156, which can store data, including historical or past flight data for the aircraft 110.

Communications from the ground station 150, which can be automated or manually constructed, can be routed from the ground computing system 154 to the ground transceivers 152. The ground transceivers 152 can then transmit communications (e.g., uplinked ACARS messages) to the aircraft 110. The uplinked communications can be received by the aircraft 110, e.g., by the transceiver 122 of the datalink communication system 120. The CMU 124 can then route the data from the received uplinked communication, e.g. to the FMC 132. The communication can then be presented to the flight crew, e.g., by way of a display screen of the CDU 134.

The ground computing devices, data store 156, as well as other components can be housed in a communication center 158, such as a communication center of the airline operating the aircraft 110. The communication center 158 can also include displays and human-machine interface devices (e.g., keyboards, mouse, etc.), among other components. The ground computing system 154 can be configured in a same or similar manner as the computing system provided in FIG. 6 and the accompanying text.

It will be appreciated that the communication system 100 provided in FIG. 1 is provided by way of example and is not intended to be limiting. In alternative aspects, the communication system 100 can have other configurations.

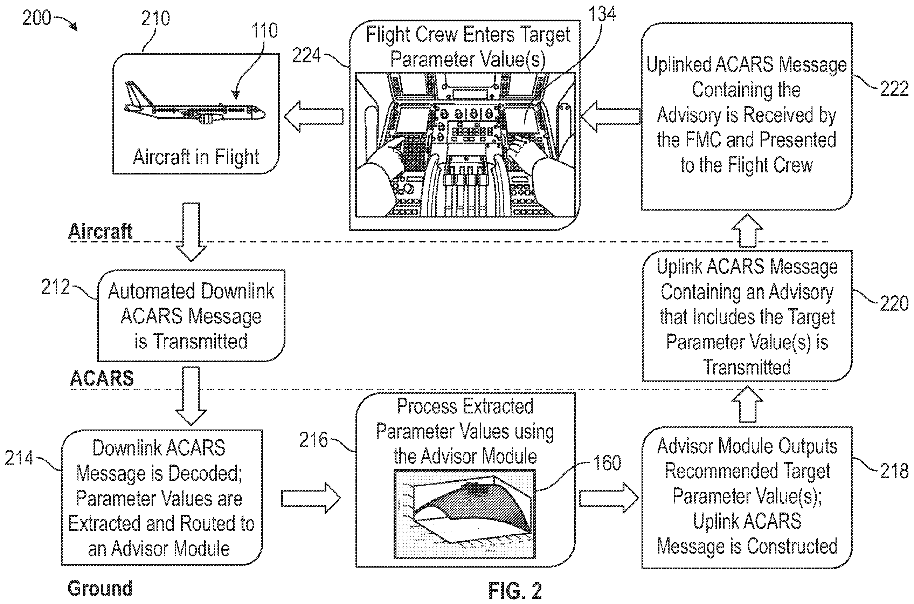

With reference now to FIGS. 1 and 2, FIG. 2 provides a flow diagram for a technique 200 for providing an advisory to a flight crew, such as an advisory that suggests a speed and/or altitude that can reduce the fuel utilized by fuel-consuming engines of an aircraft. For context, the technique 200 of FIG. 2 will be described below with respect to the aircraft 110 and the ground station 150 of FIG. 1. However, it will be appreciated that the technique 200 is applicable to other aircraft and ground station configurations.

At block 210, the aircraft 110 is in flight. For instance, the aircraft 110 can be in a cruise phase of a flight. During flight, various automated ACARS messages can be downlinked from the aircraft 110 to a ground station, such as the ground station 150 of FIG. 1. There are different types of ACARS messages that can be automatically downlinked during flight, including Aeronautical Operational Control (AOC) and Airline Administrative Control (AAC) ACARS messages, for example. AOC and AAC ACARS messages can include various information that can be downlinked. For example, downlink ACARS messages can include, without limitation, aircraft status, position, estimated time of arrival, diversion information (if applicable), weather observations, technical performance data, information relating to passengers, a combination of the foregoing, etc.

At block 212, downlink ACARS messages can be transmitted from the aircraft 110 to the ground station 150, e.g., in an automated manner. For instance, the FMC 132 can receive sensor data captured by the sensors 140 and can forward measured and/or derived parameter values to the CMU 124, which can organize such parameter values into a standard ACARS message format, rendering a downlink ACARS message that can be routed to the transceiver 122. The transceiver 122 can transmit the ACARS message, or rather, downlink the ACARS message to the ground station 150. Some of the automated ACARS messages that are downlinked can include a set of parameter values that are relevant to constructing an advisory to a flight crew of the aircraft 110 that suggests a target parameter value (or a plurality of target parameter values) that can reduce the fuel utilized by the fuel-consuming engines 114 of the aircraft 110. For instance, some downlink ACARS message can include parameter values for a gross weight of the aircraft 110, a static air temperature (or SAT), and an altitude of the aircraft 110 in flight. Such downlink ACARS messages can also include a position of the aircraft 110.

At block 214, the downlink ACARS message is received by the ground station 150. The received downlink ACARS message can then be decoded so that parameter values for relevant parameters, if present, can be extracted from the downlink ACARS message and routed to an advisor module 160 of the ground computing system 154. For instance, the downlink ACARS message can be received by one of the ground transceivers 152 and routed to the ground computing system 154. The ground computing system 154 can include an ACARS decoder that is configured to decode the downlink ACARS message and extract parameter values for relevant parameters. The extracted parameter values can be routed to the advisor module 160.

At block 216, the extracted parameter values for the relevant parameters can be processed by the advisor module 160, along with a tail specific offset, to determine a target parameter value (or values). The determined target parameter value can be a target value or setpoint for a particular parameter. The target parameter value can be recommended to a flight crew in an advisory as will described further below. As one example, the target parameter value for the aircraft 110 can be a target speed for the aircraft 110. As another example, the target parameter value for the aircraft 110 can be a target altitude for the aircraft 110. As yet another example, at block 216, a plurality of target parameter values can be determined. For instance, the plurality of target parameter values can include a target speed and a target altitude for the aircraft 110.

The advisor module 160 can be instructions and/or program stored on one or more memory devices of the ground computing system 154. The advisor module 160 can be executed by one or more processors of the ground computing system 154. The tail specific offset can indicate a deviation of an actual aircraft performance of the aircraft 110 from a baseline aircraft performance for aircraft 110. The tail specific offset can be determined by one more models (e.g., one or more deep learning models) based on past flight data associated with the aircraft 110 (e.g., flight data from a number of past flights performed by the aircraft 110 or tail itself). In this regard, the target parameter value is not only determined based on parameter values received in a downlinked ACARS message, but also based on the health or degradation of the aircraft 110 as represented by the tail specific offset.

At block 218, the advisor module 160 outputs the target parameter value(s), e.g., to a ground communications management unit, or GCMU. The GCMU can organize the target parameter value(s) into a standard ACARS format. Specifically, the uplink ACARS message can include an advisory that includes the determined target parameter value(s). The advisory can be organized in a "free text" section of the uplink ACARS message, for example. The uplink ACARS message can be routed from the GCMU to the ground transceiver 152. The ground transceiver 152 can then transmit the ACARS message, or rather, uplink the ACARS message containing the advisory to the aircraft 110.

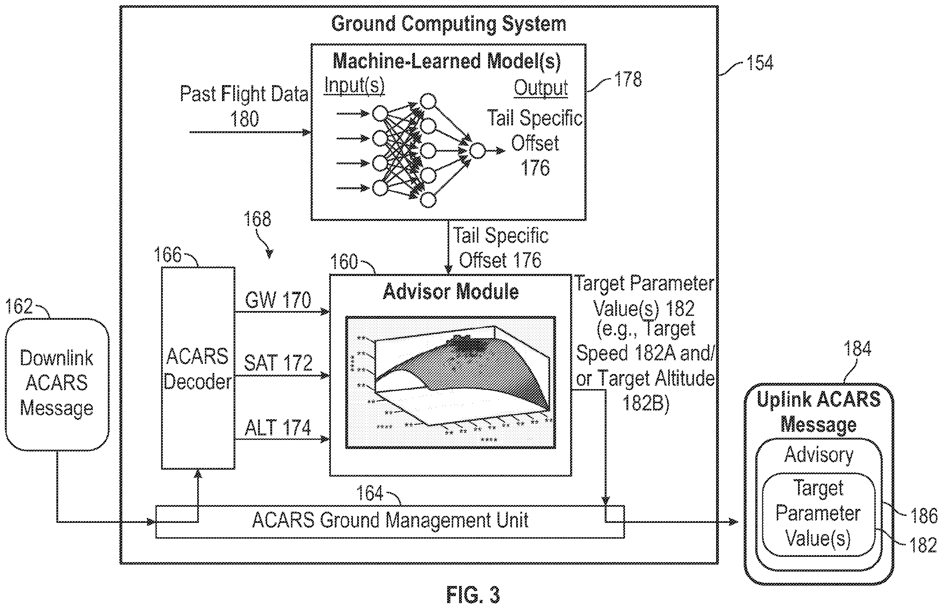

By way of example and with reference now to FIGS. 1, 2, and 3, FIG. 3 provides a flow diagram depicting the operations performed by the ground station 150, e.g., the operations performed at blocks 214, 216, 218 of the technique 200 in FIG. 2. As depicted in FIG. 3, a downlink ACARS message 162 can be received by a GCMU 164, which is operable to process and route ACARS messages. The GCMU 164 routes the downlink ACARS message 162 to an ACARS decoder 166. The ACARS decoder 166 decodes the downlink ACARS message 162, and in doing so, a determination can be made as to whether the downlink ACARS message 162 contains a set of parameter values for relevant parameters. When the downlink ACARS message 162 does not contain parameter values for relevant parameters, the downlink ACARS message 162 can be ignored by the advisor module 160. However, when the downlink ACARS message 162 contains parameter values for relevant parameters, the parameter values can be extracted from the downlink ACARS message 162 and routed to the advisor module 160.

In the example of FIG. 3, the ACARS decoder 166 decodes the downlink ACARS message 162 and extracts a set of parameter values 168 for relevant parameters. The relevant parameters in this example include a gross weight of the aircraft 110, a static air temperature at the aircraft 110, and an altitude of the aircraft 110. Accordingly, the set of parameter values 168 include a gross weight parameter value (or GW 170), a static air temperature parameter value (or SAT 172), and an altitude parameter value (or ALT 174). The set of parameter values 168 are input into the advisor module 160.

As further shown in FIG. 3, the ground computing system 154 can include one or more models, such as one or more machine-learned models and/or one or more physics-based models, to determine a tail specific offset 176. In FIG. 3, the models used to determine the tail specific offset 176 includes a machine-learned model 178 configured as a deep learning model, which in this example is a neural network that include multiple layers. Generally, the tail specific offset 176 can indicate a deviation of an actual aircraft performance of the aircraft 110 from a baseline aircraft performance for aircraft 110.

The machine-learned model 178 is trained to output the tail specific offset 176 and includes an input layer, a hidden layer, and an output layer. Although only one hidden layer is shown, it will be appreciated that more than one hidden layer can be included in the neural network, or machine-learned model 178. The input layer includes four neurons, the hidden layer includes five neurons, and the output layer includes one neuron. It will be appreciated that any suitable number of neurons may be included in each layer and that the machine-learned model 178 of FIG. 3 is provided for example purposes and should not be construed to be limiting in any way. Between the neurons of the input and the hidden layer and between the hidden and output layers, various synapses are shown extending therebetween. Each synapsis has a particular weight associated with it, as will be appreciated by one of skill in the art. Such weights can be adjusted during training. The machine-learned model 178 can be trained to model a physics-based model, for example.

The machine-learned model 178 can receive input data, e.g., past flight data 180 from a number of past flights performed by the aircraft 110 or tail itself, such as the past two hundred (200) flights. The past flight data 180 can include parameter values for a plurality of parameters, such as parameters that impact fuel use or fuel flow to the engines 114 of the aircraft 110. Example parameter that impact fuel flow can include, without limitation, gross weight, altitude, temperatures (e.g., static air temperature, engine temperatures, etc.), aircraft speeds, wind speed and/or wind direction, other ambient conditions, a combination of the foregoing, etc. Based on the input data, or past flight data 180, the machine-learned model 178 can output the tail specific offset 176.

The tail specific offset 176 can be input into the advisor module 160. One or more processors of the ground computing system 154 can execute the advisor module 160 to determine a target parameter value 182 (or values) for the aircraft 110 based at least in part on the set of parameter values 168 and the tail specific offset 176.

In some example aspects, the target parameter value 182 for the aircraft 110 can be a target speed 182A for the aircraft 110. As another example, the target parameter value 182 for the aircraft 110 can be a target altitude 182B for the aircraft 110. As yet another example, at block 216, a plurality of target parameter values 182 can be determined. For instance, the plurality of target parameter values 182 can include the target speed 182A and the target altitude 182B for the aircraft 110. The advisor module 160 can forward the determined target parameter value 182 (or values) to the GCMU 164, which can organize the target parameter value 182 (or values) into a standard ACARS format, rendering an uplink ACARS message 184. The uplink ACARS message 184 can include an advisory 186 that includes the target parameter value 182 (or values). The uplink ACARS message 184 can be routed to the ground transceiver 152, which can then transmit the uplink ACARS message 184 to the aircraft 110.

At block 220, with reference again to FIGS. 1 and 2, an uplink ACARS message (e.g., the uplink ACARS message 184 of FIG. 3) can be uplinked to the aircraft 110, e.g., via airband radio or SATCOM communication. The uplink ACARS message can contain the advisory that includes the target parameter value (or values).

At block 222, the uplinked ACARS message containing the advisory is received by the FMC 132 and presented to the flight crew, e.g., by way of the display screen of the CDU 134. For instance, the uplink ACARS message can be received by the transceiver 122 and forwarded to the CMU 124. The CMU 124 can then route the uplink ACARS message to the FMC 132. The FMC 132 can cause the contents of the uplink ACARS message to be presented to the flight crew, e.g., by causing the advisory containing the target parameter value(s) to be displayed on the display screen of the CDU 134. In some alternative aspects, the FMC 132 can cause the advisory containing the target parameter value(s) to be presented to the flight crew via other means, such as by an audible message, augmented reality glasses or helmet, a multifunctional display, a combination of the foregoing, etc.

At block 224, the flight crew can determine whether to implement the suggested target parameter value(s) of the advisory. When a decision is made not to implement the suggested target parameter value(s), the flight crew can simply ignore the advisory. When a decision is made to implement the suggested target parameter value(s), the flight crew can enter the target parameter value(s), e.g., by inputting the values into the CDU 134. When the target parameter value(s) are implemented, for example, the speed and/or altitude can be set to a speed and/or altitude that can provide fuel savings for the aircraft 110. Stated differently, by setting the aircraft speed and/or altitude according to the suggested target parameter value(s) of the advisory, the fuel burn by the engines 114 of the aircraft 110 can be reduced, which can advantageously reduce carbon emissions and result in fuel savings.

In some alternative aspects, the FMC 132 can receive the uplinked ACARS message containing the advisory at block 222 and automatically set the aircraft speed and/or altitude (or more generally, one or more target parameter(s)) according to the suggested target parameter value(s) of the advisory. A notification can be presented to the flight crew to notify them of the change.

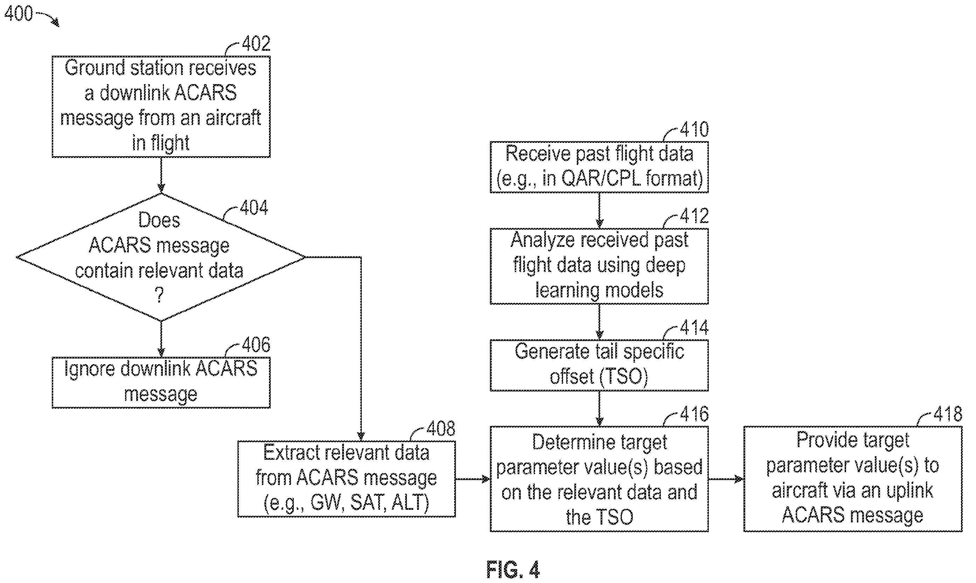

FIG. 4 provides a flow diagram of a method 400 of generating, at a ground station, one or more target parameter values that can be suggested to a flight crew in an advisory. The target parameter values are provided to the flight crew in order to encourage fuel savings and reduction of carbon emissions.

At 402, the method 400 can include receiving a downlink aircraft communications, addressing and reporting system (ACARS) message from an aircraft in flight. For instance, a ground transceiver of a ground station can receive the downlink ACARS message and can forward the received downlink ACARS message to a ground computing system of the ground station. The ground computing system can process the downlink ACARS message. In some implementations, the downlink ACARS message is generated and downlinked from the aircraft to the ground station automatically.

At 404, the method 400 can include determining whether the downlink ACARS message contains relevant data. For instance, the ground computing system can determine whether parameter values of parameters that are relevant in determining one or more target parameter values for the aircraft are present in the downlink ACARS message. Stated another way, it is determined at 404 whether the downlink ACARS message contains all the relevant data for target parameter values to be calculated.

At 406, the method 400 can include ignoring the downlink ACARS message when the downlink ACARS message does not contain relevant data as determined at 404. The downlink ACARS message is ignored at least for the purpose of determining the target parameter value, but as will be appreciated, the ACARS message can contain information that may be applicable for other purposes.

At 408, the method 400 can include extracting the relevant data from the downlink ACARS message when the downlink ACARS message contains the relevant data as determined at 404. For instance, the ground computing system can extract parameter values for relevant parameters. In some implementations, the relevant parameters include a gross weight of the aircraft, a static air temperature around the aircraft in flight, and an altitude of the aircraft. Accordingly, in such implementations, the parameter values can include a parameter value for a gross weight of the aircraft, a parameter value for a static air temperature, and a parameter value for an altitude of the aircraft in flight. Other relevant parameters are possible.

A tail specific offset can be determined according to 410, 412, and 414 of the method 400. Generally, the tail specific offset indicates a deviation of an actual aircraft performance of the aircraft from a baseline aircraft performance for the aircraft. In this regard, the tail specific offset indicates a health or degradation of the aircraft with respect to its performance when new.

At 410, in generating the tail specific offset, the method 400 includes receiving past flight data associated with the aircraft. The flight data can received in Quick Access Recorder (QAR) and/or a Control Panel file (CPL) format, for example. Such data can provided by airlines or aircraft operators. The past flight data can be, for example, data from a number of past flights performed by the aircraft or tail itself, such as the past one hundred (100) flights. The past flight data can include parameter values for a plurality of parameters, such as parameters that impact fuel use or fuel flow to the engines of the aircraft. Example parameter that impact fuel flow can include, without limitation, gross weight, altitude, temperatures (e.g., static air temperature, engine temperatures, etc.), aircraft speeds, wind speed and/or wind direction, other ambient conditions, a combination of the foregoing, etc. The past flight data can be stored, e.g., in a data store, and accessed by the one or more processors of the ground computing system.

At 412, the past flight data, or parameter values from the past flight data that affect fuel flow to engines of the aircraft, are analyzed by one or more trained machine-learned models. The one or more models can be deep learning models, such as a feed-forward neural networks. One or more of the machine-learned models can be trained to model a physics-based model, for example. In yet other implementations, the past flight data, or parameter values from the past flight data that affect fuel flow to engines of the aircraft, can be analyzed by one or more physics-based models and/or one or more statistical models.

At 414, the method 400 can include using a machine-learned model to output the tail specific offset. For instance, the one or more models, when executed by one or more processors of the ground computing system, can generate and output the tail specific offset, which can be input into an advisor module of the ground computing system so that a determination can be made at 416.

At 416, the method 400 can include determining at least one target parameter value for the aircraft based at least in part on the parameter values extracted from downlink ACARS message and the tail specific offset. For instance, the ground computing system can include the advisor module that is executable by one or more processors of the ground computing system. The parameter values extracted from downlink ACARS message at 408 and the tail specific offset generated at 414 can be used by the advisor module to output at least one target parameter value. In some implementations, the target parameter value determined at 410 is a target speed for the aircraft. In some implementations, the target parameter value is a target altitude for the aircraft. In yet other implementations, the target parameter value is one of a plurality of target parameter values for the aircraft. In such implementations, the plurality of target parameter values can include a target speed and a target altitude for the aircraft. The tail specific offset is modeled as a function of the input parameter values and the targets are computed using that model.

At 418, the method 400 can include creating an uplink ACARS message and providing the uplink ACARS message containing the target parameter value to the aircraft in flight. For instance, the ground computing system can organize the determined parameter value(s) into a standard ACARS format. The uplink ACARS message can be constructed to have an advisory containing the target parameter values, for example. Once constructed, the uplink ACARS message can be routed to a ground transceiver of the ground station. The ground transceiver can uplink or transmit the uplink ACARS message to the aircraft. Accordingly, an advisory suggesting the target parameter value(s) can be presented to a flight crew of the aircraft. The flight crew (e.g., a pilot) can use the recommended target parameter values (e.g., recommended speed and altitude) in order to save fuel and reduce carbon emissions.

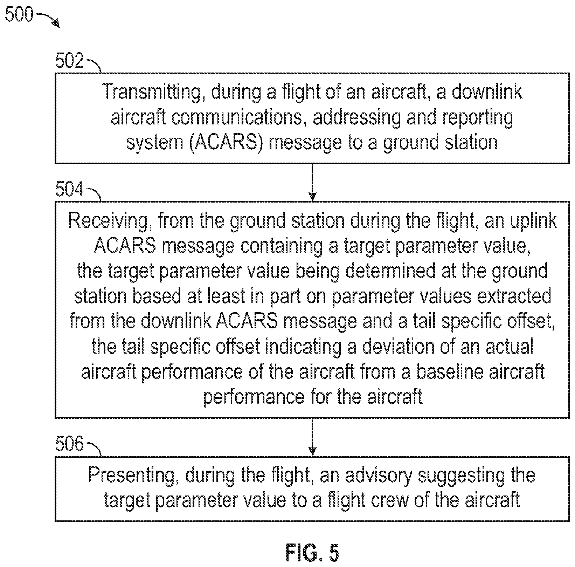

FIG. 5 provides a flow diagram of a method 500 of generating, at a ground station, one or more target parameter values that can be suggested to a flight crew in an advisory. The target parameter values are provided to the flight crew in order to encourage fuel savings and reduction of carbon emissions.

At 502, the method 500 can include transmitting, during a flight of the aircraft, a downlink ACARS message to a ground station. For instance, an FMC can instruct, during a flight of the aircraft, a transmission of a downlink ACARS message to a ground station. A datalink communication system of the aircraft can downlink various ACARS messages during flight, including the downlink ACARS message. The downlink ACARS message can include relevant data, such as parameter values of parameters that are relevant in determining one or more target parameter values for the aircraft.

At 504, the method 500 can include receiving, from the ground station during the flight, an uplink ACARS message containing a target parameter value (or at least one target parameter value). The target parameter value can be determined at a ground station based at least in part on parameter values extracted from the downlink ACARS message and a tail specific offset, the tail specific offset indicating a deviation of an actual aircraft performance of the aircraft from a baseline aircraft performance for the aircraft. For instance, the target parameter value can be determined and constructed into an uplink ACARS message in accordance with the method 400 of FIG. 4. The uplink ACARS message can be initially received by the datalink communication system of the aircraft, e.g., by a transceiver thereof. The uplink ACARS message can then be routed to a FMC by a CMU. The FMC can receive the uplink ACARS message.

At 506, the method 500 can include presenting, during the flight, an advisory suggesting the target parameter value to a flight crew of the aircraft. For instance, the FMC can generate, during the flight, an advisory that presents the target parameter value(s) to a flight crew of the aircraft. The FMC can cause a CDU or other display to present the advisory suggesting the target parameter value(s) to a flight crew of the aircraft. The flight crew (e.g., a pilot) can use the recommended target parameter values (e.g., recommended speed and altitude) in order to save fuel and reduce carbon emissions.

In some alternative implementations, the aircraft can be automatically controlled, by a computing device (e.g., a FMC) of the aircraft, according to the target parameter value(s) provided in the uplink ACARS message.

FIG. 6 provides a block diagram of an example computing system 600. Various systems noted herein can be configured in a same or similar manner as the computing system 600. For instance, the ground computing system 154 in FIG. 1 can be arranged and configured in a same or similar manner as the computing system 600. Moreover, various computing devices or computers (e.g., the FMC) noted herein can be arranged and configured in a same or similar manner as one of the computing devices of the computing system 600.

As shown in FIG. 6, the computing system 600 can include one or more computing device(s) 602. The one or more computing device(s) 602 can include one or more processor(s) 604 and one or more memory device(s) 606. The one or more processor(s) 604 can include any suitable processing device, such as a microprocessor, microcontroller, integrated circuit, logic device, or other suitable processing device. The one or more memory device(s) 606 can include one or more computer-readable medium, including, but not limited to, non-transitory computer-readable medium, RAM, ROM, hard drives, flash drives, and other memory devices.

The one or more memory device(s) 606 can store information accessible by the one or more processor(s) 604, including computer-readable instructions 608 that can be executed by the one or more processor(s) 604. The instructions 608 can be any set of instructions that when executed by the one or more processor(s) 604, cause the one or more processor(s) 604 to perform operations. The instructions 608 can be software written in any suitable programming language or can be implemented in hardware.

The memory device(s) 606 can further store data 610 that can be accessed by the processors 604. For example, the data 610 can include sensor data such as engine parameters, model data, logic data, etc., as described herein. The data 610 can include one or more table(s), function(s), algorithm(s), model(s), equation(s), etc. according to example aspects of the present disclosure.

The one or more computing device(s) 602 can also include a communication interface 612 used to communicate, for example, with the other components of the system. The communication interface 612 can include any suitable components for interfacing with one or more network(s), including for example, transmitters, receivers, ports, controllers, antennas, or other suitable components.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

Also described herein are the following numbered clauses:
Clause 1. A method, comprising:
   receiving a downlink aircraft communications, addressing and reporting system (ACARS) message from an aircraft in flight;
   determining a target parameter value for the aircraft based at least in part on parameter values extracted from the downlink ACARS message and a tail specific offset, the tail specific offset indicating a deviation of an actual aircraft performance of the aircraft from a baseline aircraft performance for the aircraft; and
   transmitting an uplink ACARS message containing the target parameter value to the aircraft in flight.
Clause 2. The method of clause 1, further comprising:
   presenting an advisory suggesting the target parameter value to a flight crew of the aircraft.
Clause 3. The method of clause 1 or 2, wherein the downlink ACARS message is generated and downlinked from the aircraft to a ground station automatically.
Clause 4. The method of any preceding clause, wherein the parameter values include a parameter value for a gross weight of the aircraft, a parameter value for a static air temperature, and parameter value for an altitude of the aircraft in flight.
Clause 5. The method of any of clauses 1 to 4, wherein the target parameter value is a target speed for the aircraft.
Clause 6. The method of any of clauses 1 to 4, wherein the target parameter value is a target altitude for the aircraft.
Clause 7. The method of any preceding clause, wherein the target parameter value is one of a plurality of target parameter values for the aircraft, and wherein the plurality of target parameter values include a target speed and a target altitude for the aircraft.
Clause 8. The method of any preceding clause, wherein the receiving, the determining, and the providing are performed at a ground station.
Clause 9. The method of any preceding clause, further comprising:
   receiving past flight data associated with the aircraft; and
   using a machine-learned model to output the tail specific offset based at least in part on the past flight data.
Clause 10. The method of any preceding clause, further comprising:
   automatically controlling, by a computing device of the aircraft, the aircraft according to the target parameter value provided in the uplink ACARS message to the aircraft.
Clause 11. A ground station, comprising:
   one or more processors; and
   one or more memory devices that store a program executable by the one or more processors to perform an operation, the operation comprising:
      receiving a downlink aircraft communications, addressing and reporting system (ACARS) message from an aircraft in flight;
      determining a target parameter value for the aircraft based at least in part on parameter values extracted from the downlink ACARS message and a tail specific offset, the tail specific offset indicating a deviation of an actual aircraft performance of the aircraft from a baseline aircraft performance for the aircraft; and
      transmitting an uplink ACARS message containing the target parameter value to the aircraft in flight.
Clause 12. The ground station of clause 11, wherein the parameter values include a parameter value for a gross weight of the aircraft, a parameter value for a static air temperature, and parameter value for an altitude of the aircraft in flight.
Clause 13. The ground station of clause 11 or 12, wherein the target parameter value is one of a plurality of target parameter values for the aircraft, and wherein the plurality of target parameter values include a target speed and a target altitude for the aircraft.
Clause 14. The ground station of any of clauses 11 to 13, wherein the operation further comprises:
   receiving past flight data associated with the aircraft; and
   using a machine-learned model to output the tail specific offset based at least in part on the past flight data.
Clause 15. The ground station of any of clauses 11 to 14, wherein the operation further comprises:
   generating the uplink ACARS message, the uplink ACARS message has an advisory that contains the target parameter value.
Clause 16. A computing system for an aircraft, comprising:
   one or more processors; and
   one or more memory devices that store a program executable by the one or more processors to perform an operation, the operation comprising:
      instructing, during a flight of the aircraft, a transmission of a downlink aircraft communications, addressing and reporting system (ACARS) message to a ground station;
      receiving, during the flight, an uplink ACARS message transmitted by the ground station, the uplink ACARS message contains a target parameter value based at least in part on parameter values extracted from the downlink ACARS message and a tail specific offset, the tail specific offset indicating a deviation of an actual aircraft performance of the aircraft from a baseline aircraft performance for the aircraft; and
      generating, during the flight, an advisory that presents the target parameter value to a flight crew of the aircraft.
Clause 17. The computing system of clause 16, wherein at least one processor of the one or more processors and at least one memory device of the one or more memory devices are embodied in a flight management computer, and wherein the at least one processor of the flight management computer receives the uplink ACARS message and causes the advisory to be presented to the flight crew.
Clause 18. The computing system of clause 16 or 17, wherein the target parameter value is one of a plurality of target parameter values for the aircraft, and wherein the plurality of target parameter values include a target speed and a target altitude for the aircraft.
Clause 19. The computing system of any of clauses 16 to 18, wherein the parameter values include a parameter value for a gross weight of the aircraft, a parameter value for a static air temperature, and parameter value for an altitude of the aircraft in flight.
Clause 20. The computing system of any of clauses 16 to 19, wherein the operation further comprises:
   generating the downlink ACARS message, and wherein the generating and the causing, during the flight of the aircraft, transmission of the downlink ACARS message to the ground station occur automatically without flight crew intervention.

## Claims

1. A method (400), comprising:
receiving (402) a downlink aircraft communications, addressing and reporting system (ACARS) message (162) from an aircraft (110) in flight;
determining (416) a target parameter value (182) for the aircraft (110) based at least in part on parameter values (186) extracted from the downlink ACARS message (162) and a tail specific offset (176), the tail specific offset (176) indicating a deviation of an actual aircraft performance of the aircraft (110) from a baseline aircraft performance for the aircraft (110); and
transmitting (418) an uplink ACARS message (184) containing the target parameter value (182) to the aircraft (110) in flight.

2. The method (400) of claim 1, further comprising:
presenting (222) an advisory (186) suggesting the target parameter value (182) to a flight crew of the aircraft (110).

3. The method (400) of claim 1 or 2, wherein the downlink ACARS message (162) is generated and downlinked from the aircraft (110) to a ground station (150) automatically.

4. The method (400) of any preceding claim, wherein the parameter values (186) include a parameter value for a gross weight (170) of the aircraft (110), a parameter value for a static air temperature (172), and parameter value for an altitude (174) of the aircraft (110) in flight.

5. The method (400) of any preceding claim, wherein the target parameter value (182) is a target speed (182A) for the aircraft (110) or a target altitude (182B) for the aircraft (110); and/or wherein the target parameter value (182) is one of a plurality of target parameter values (182) for the aircraft (110), and wherein the plurality of target parameter values (182) include a target speed (182A) and a target altitude (182B) for the aircraft (110).

6. The method (400) of any preceding claim, wherein the receiving, the determining, and the providing are performed at a ground station (150).

7. The method (400) of any preceding claim, further comprising:
receiving past flight data (180) associated with the aircraft (110); and
using a machine-learned model (178) to output the tail specific offset (176) based at least in part on the past flight data (180).

8. The method (400) of any preceding claim, further comprising:
automatically controlling, by a computing device of the aircraft (110), the aircraft (110) according to the target parameter value (182) provided in the uplink ACARS message (184) to the aircraft (110).

9. A ground station (150), comprising:
one or more processors (604); and
one or more memory devices (606) that store a program (608) executable by the one or more processors (604) to perform a method according to any of claims 1 to 7.

10. The ground station (150) of claim 9, wherein the method further comprises:
generating the uplink ACARS message (184), the uplink ACARS message (184) having an advisory (186) that contains the target parameter value (182).

11. A computing system (130) for an aircraft (110), the computing system (130) comprising:
one or more processors (604); and
one or more memory devices (606) that store a program (608) executable by the one or more processors (604) to perform an operation, the operation comprising:
instructing (502), during a flight of the aircraft (110), a transmission of a downlink aircraft communications, addressing and reporting system (ACARS) message (162) to a ground station (150);
receiving (504), during the flight, an uplink ACARS message (184) transmitted by the ground station (150), the uplink ACARS message (184) contains a target parameter value (182) based at least in part on parameter values (186) extracted from the downlink ACARS message (162) and a tail specific offset (176), the tail specific offset (176) indicating a deviation of an actual aircraft performance of the aircraft (110) from a baseline aircraft performance for the aircraft (110); and
generating (506), during the flight, an advisory (186) that presents the target parameter value (182) to a flight crew of the aircraft (110).

12. The computing system (130) of claim 11, wherein at least one processor of the one or more processors (604) and at least one memory device of the one or more memory devices (606) are embodied in a flight management computer (132), and wherein the at least one processor of the flight management computer (132) receives the uplink ACARS message (184) and causes the advisory (186) to be presented to the flight crew.

13. The computing system (130) of claim 11 or 12, wherein the target parameter value (182) is one of a plurality of target parameter values (182) for the aircraft (110), and wherein the plurality of target parameter values (182) include a target speed (182A) and a target altitude (182B) for the aircraft (110).

14. The computing system (130) of any of claims 11 to 13, wherein the parameter values (186) include a parameter value for a gross weight (170) of the aircraft (110), a parameter value for a static air temperature (172), and parameter value for an altitude (174) of the aircraft (110) in flight.

15. The computing system (130) of any of claims 11 to 14, wherein the operation further comprises:
generating the downlink ACARS message (162), and
wherein the generating and the causing, during the flight of the aircraft (110), transmission of the downlink ACARS message (162) to the ground station (150) occur automatically without flight crew intervention.
